# EUROPÄISCHE PATENTANMELDUNG

(11) **EP 4 321 785 A1**
(43) Veröffentlichungstag der Anmeldung: **14.02.2024**
(21) Anmeldenummer: 22189222.7
(22) Anmeldetag: 08.08.2022
(51) Int. Cl.: F16L 5/04, F16L 5/14, H02G 3/22

(54) **SET AN VORRICHTUNGEN ZUR DURCHFÜHRUNG VON LEITUNGEN, ROHREN UND/ODER KABELN DURCH EIN GEBÄUDEBAUTEIL**

(71) Anmelder: Hilti Aktiengesellschaft, 9494 Schaan (LI)
(72) Erfinder: Voss, Brendan, 80798 München (DE); Mordau, Ulf, 86807 Buchloe (DE); Preschl, Günter, 89077 Ulm (DE); Mankessi, Nick, 93309 Kelheim (DE); Belz, Anja, 86899 Landsberg (DE)
(74) Vertreter: Hilti Aktiengesellschaft Corporate Intellectual Property

(57) **Zusammenfassung**

Die Erfindung betrifft ein Set an Vorrichtungen (50), umfassend wenigstens zwei Vorrichtungen (1, 52, 53, 54) zur Durchführung von Leitungen, Rohren und/oder Kabeln durch einen Gebäudeteil, jeweils aufweisend ein Gehäuse mit einer Gehäusewand, wobei das Gehäuse einen von der Gehäusewand begrenzten, in Längsrichtung (L) verlaufenden axialen Durchlasskanal (6) aufweist, der an gegenüberliegenden Enden (10) jeweils eine Öffnung (12) aufweist, wobei die Vorrichtungen (1, 52, 53, 54) eine Länge (L1, L2, L3) in Längsrichtung (L) und jeweils einen senkrecht zur Längsrichtung (L) angeordneten rechteckigen Querschnitt aufweisen. Die wenigstens zwei Vorrichtungen (1, 52, 53, 54) weisen jeweils wenigstens einen Verbindungsbereich (72, 74, 76) auf, wobei wenigstens ein separates Verbindungselement (70) vorgesehen ist, mittels welchem die wenigstens zwei Vorrichtungen (1, 52, 53, 54) in den Verbindungsbereichen (72, 74, 76) lösbar miteinander verbindbar sind.

## Beschreibung

### Technisches Gebiet

Die Erfindung betrifft ein Set an Vorrichtungen mit mehreren Vorrichtungen zur Durchführung von Leitungen, Rohren und/oder Kabeln durch Gebäudebauteile, wie z.B. Gebäudewände, Gebäudedecken und dergleichen, und Maßnahmen, um einen Durchtritt von Brandgasen und Rauch durch solche Vorrichtungen zu verhindern.

### Technischer Hintergrund

Bei der Installation ist es üblich, dass mehrere Leitungen, Rohre und/oder Kabel in Bündel aufgeteilt werden, die durch einzelne Vorrichtungen durch Gebäudeteile geführt werden. Je nach vorliegendem Anwendungsfall unterscheiden sich die Mengen der durch die Gebäudeteile zu führenden Leitungen, Rohre und/oder Kabel sowohl in Anzahl als auch in Größe, so dass mehrere Vorrichtungen in einem Bereich vorgesehen sind.

Aus der Praxis ist es bekannt, mehrere identisch ausgeführte Vorrichtungen in einem Montageflansch bzw. Rahmen zusammenzufassen, wobei die Vorrichtungen beispielsweise über an einer Vorrichtung angeordnete umzubiegende Laschen miteinander verbunden werden.

Diese Art der Verbindung von Vorrichtungen ist in der Anwendung aufwändig und gegebenenfalls nicht in gewünschtem Umfang reversibel umsetzbar.

Es ist Aufgabe der vorliegenden Erfindung, ein Set an Vorrichtungen zur Durchführung von Leitungen, Rohren und/oder Kabeln durch einen Gebäudeteil zur Verfügung zu stellen, mit dem verschiedene Vorrichtungen auf einfache Weise reversibel miteinander verbindbar sind.

### Offenbarung der Erfindung

Diese Aufgabe wird durch die Vorrichtung zur Durchführung von Leitungen, Rohren und/oder Kabeln gemäß Anspruch 1 gelöst.

Weitere Ausgestaltungen sind in den abhängigen Ansprüchen angegeben.

Gemäß einem Aspekt der Erfindung ist ein Set an Vorrichtungen vorgesehen, umfassend wenigstens zwei Vorrichtungen zur Durchführung von Leitungen, Rohren und/oder Kabeln durch einen Gebäudeteil, jeweils aufweisend ein Gehäuse mit einer Gehäusewand, wobei das Gehäuse einen von der Gehäusewand begrenzten, in Längsrichtung verlaufenden axialen Durchlasskanal aufweist, der an gegenüberliegenden Enden jeweils eine Öffnung aufweist, wobei die Vorrichtungen eine Länge in Längsrichtung und jeweils einen senkrecht zur Längsrichtung angeordneten rechteckigen Querschnitt aufweisen.

Erfindungsgemäß ist vorgesehen, dass die wenigstens zwei Vorrichtungen jeweils wenigstens einen Verbindungsbereich aufweisen, wobei wenigstens ein separates Verbindungselement vorgesehen ist, mittels welchem die wenigstens zwei Vorrichtungen in den Verbindungsbereichen lösbar miteinander verbindbar sind.

Mittels des wenigstens einen Verbindungselements können zwei Vorrichtungen des Sets an Vorrichtungen auf einfache Weise miteinander verbunden und wieder voneinander gelöst werden. Die vorgeschlagene Lösung ist robust ausführbar, so dass eine Vielzahl von Verbindungs- und Lösungsvorgängen ohne eine Funktionsbeeinträchtigung möglich sind. Vorzugsweise sind sämtliche Vorrichtungen des Sets an Vorrichtungen mittels baugleich ausgeführten Verbindungselementen miteinander verbindbar.

In einer konstruktiv einfachen Ausführung der Erfindung ist das separate Verbindungselement clipartig mit den beiden Vorrichtungen verbindbar. Vorzugsweise nimmt das separate Verbindungselement in mit zwei Verbindungsbereichen von zwei verschiedenen Vorrichtungen verbundenem Zustand einen verrasteten Zustand ein und ist hierdurch gegen ein unbeabsichtiges Lösen sicher geschützt. Es kann vorgesehen sein, dass das separate Verbindungselement in mit zwei Vorrichtungen verbundenem Zustand mit dem einen Hinterschnitt aufweisenden Verbindungsbereich der jeweiligen Vorrichtung verbunden ist.

Das separate Verbindungselement weist bei einer vorteilhaften Ausführung der Erfindung einen zentralen Aufnahmebereich auf, welcher zur gemeinsamen Einfassung eines Wandungsbereichs einer ersten Vorrichtung und eines Wandungsbereichs einer zweiten Vorrichtung vorgesehen ist. Der Aufnahmebereich weist dabei eine Dicke auf, die im Wesentlichen einer doppelten Wandstärke der Vorrichtungen entspricht.

Um eine sichere Verbindung des Verbindungselements mit zwei Vorrichtungen sicherzustellen, kann das separate Verbindungselement zwei Schenkel aufweisen, wobei ein Schenkel des separaten Verbindungselements zum Verrasten mit einer Vorrichtung und der andere Schenkel des separaten Verbindungselements zum Verrasten mit einer anderen Vorrichtung ausgeführt ist. Die zwei Schenkel des Verbindungselements werden bei einem Verbindungsvorgang des Verbindungselements mit zwei Vorrichtungen senkrecht zu einer Einführrichtung des Verbindungselements vorgespannt, um mit Endbereichen der Schenkel in einem komplett eingeführten Zustand hinter Wandungsbereichen der jeweiligen Vorrichtungen zu verrasten. In dem komplett eingeführten Zustand nimmt das Verbindungselement wieder seine nicht vorgespannte bzw. unvorgespannte Form ein. Hierdurch ist das Verbindungselement entgegen einer Bewegung entgegen der Einführrichtung an den Vorrichtungen gehalten.

Ein ungewünschtes Lösen des separaten Verbindungselements ist bei einer vorteilhaften Ausführung des Sets an Vorrichtungen dadurch sichergestellt, dass das separate Verbindungselement wenigstens einen Bereich aufweist, der zum Lösen des separaten Verbindungselements von den Vorrichtungen mittels eines Werkzeugs betätigbar ist.

Das separate Verbindungselement weist vorzugsweise einen im Wesentlichen W-förmigen Querschnitt auf, wobei das separate Verbindungselement vorzugsweise mit Federstahl ausgeführt ist.

Bei einer vorteilhaften Ausführung eines Sets an Vorrichtungen weisen die Vorrichtungen eine Breite in einer Querrichtung und eine Höhe in einer Hochrichtung auf, wobei eine erste Vorrichtung eine Breite, eine Höhe und eine Länge und eine zweite Vorrichtung eine Breite, eine Höhe und eine Länge aufweist, wobei ein Verhältnis aus der Höhe der zweiten Vorrichtung zu der Höhe der ersten Vorrichtung n1/x1 beträgt, wobei n1 und x1 aus der Menge der natürlichen Zahlen sind und nicht identisch sind, und/oder ein Verhältnis aus der Breite der zweiten Vorrichtung zu der Breite der ersten Vorrichtung n2/x2 beträgt, wobei n2 und x2 aus der Menge der natürlichen Zahlen sind und nicht identisch sind.

Eine derartige Ausführung hat den Vorteil, dass durch das Vorsehen von Vorrichtungen mit verschiedenen Querschnitten auf einfache Weise ein für den jeweiligen Anwendungsfall optimierter Beladungsgrad mit einer entsprechend hohen Abdichtung erzielbar ist. Darüber hinaus ist ein für einen Anwendungsfall benötigter gesamter Montagequerschnitt aufgrund der verschiedenen Größen des Sets der Vorrichtungen gegenüber einer Ausführung mit identisch ausgeführten Vorrichtungen auf einfache Weise reduzierbar.

Eine Dimensionierung der Vorrichtungen ist dabei insbesondere derart gewählt, dass verschiedene Vorrichtungen in einen Rahmen bzw. Montageflansch mit einer definierten Höhe und einer gegebenenfalls variabel einstellbaren Breite einpassbar sind und einen Aufnahmeraum bzw. einen Innenquerschnitt des Rahmens in montiertem Zustand im Wesentlichen vollständig ausfüllen.

Bei einer vorteilhaften Ausführung eines Sets an Vorrichtungen nach der Erfindung ist vorgesehen, dass ein Verhältnis aus der zweiten Höhe H2 zu der ersten Höhe H1 1/1, 1/2, 1/3, 1/4 oder 2/3 beträgt, und/oder dass ein Verhältnis aus der zweiten Breite B2 zu der ersten Breite B1 1/1, 1/2, 1/3, 1/4 oder 2/3 beträgt. Hierdurch kann auf einfache Weise ein Durchführungsquerschnitt eines Rahmens vollständig ausgenutzt werden und gleichzeitig für die jeweiligen Anwendungsfälle verschieden große Vorrichtungen zur Verfügung gestellt werden.

Besonders vorteilhaft ist es, wenn das Set an Vorrichtungen wenigstens eine dritte Vorrichtung mit einer Länge, einer Breite und einer Höhe vorgesehen ist, wobei ein Verhältnis der dritten Höhe zu der Höhe der ersten Vorrichtung oder zu der Höhe der zweiten Vorrichtung 1/1, 1/2, 1/3, 1/4 oder 2/3 beträgt. Alternativ oder zusätzlich hierzu kann wenigstens eine dritte Vorrichtung mit einer Länge, einer Breite und einer Höhe vorgesehen sein, wobei ein Verhältnis der Breite der dritten Vorrichtung zu der Breite der ersten Vorrichtung oder zu der Breite der zweiten Vorrichtung 1/1, 1/2, 1/3, 1/4 oder 2/3 beträgt. Es kann dabei eine beliebige Anzahl an Vorrichtungen vorgesehen sein, wobei wenigstens zwei, aber auch drei oder mehr verschiedene Dimensionierungen vorgesehen sein können. Je größer die Anzahl der Vorrichtungen mit verschiedenen Dimensionierungen ist, desto einfacher kann eine für den jeweiligen Anwendungsfall optimierte Querschnittsfläche erzielt werden.

Bei einer vorteilhaften Ausführung eines Sets an Vorrichtungen ist es vorgesehen, dass wenigstens eine Vorrichtung einen quadratischen Querschnitt aufweist. Beispielsweise können zwei Vorrichtungen mit unterschiedlich großem quadratischen Querschnitt eingesetzt werden, wobei eine Höhe und eine Breite der kleinen Vorrichtung vorzugsweise 1/3 oder 2/3 einer Höhe und einer Breite einer größeren Vorrichtung beträgt.

Alternativ hierzu können auch Vorrichtungen mit rechteckigem Querschnitt zum Einsatz kommen, wobei ein Verhältnis aus einer Breite zu einer Höhe einer Vorrichtung grundsätzlich beliebig wählbar ist und die eine oder mehreren weiteren Vorrichtungen ein hieran angepasstes Verhältnis aus einer Höhe zu einer Breite aufweisen.

Besonders bevorzugt sind die Längen der Vorrichtungen des Sets aus Vorrichtungen im Wesentlichen identisch.

Um ein einfaches Anbringen der Vorrichtungen an einer Wand oder einer Decke zu ermöglichen, kann das Set an Vorrichtungen einen Rahmen aufweisen, der zur Anbringung an einer Wand oder Decke vorgesehen ist und der einen zur Beladung vorgesehenen Aufnahmeraum bzw. Innenquerschnitt definiert, in dem wenigstens zwei Vorrichtungen anordenbar sind. Der Rahmen kann beispielsweise eine einer Vorrichtung entsprechende Höhe oder insbesondere ein Vielfaches der Höhe einer Vorrichtung des Sets an Vorrichtungen, beispielsweise die doppelte oder dreifache Höhe einer Vorrichtung, aufweisen. Besonders bevorzugt ist der Rahmen einstellbar, so dass insbesondere eine Breite des von dem Rahmen freigegebenen Innenquerschnitts einstellbar ist. Alternativ oder zusätzlich kann auch eine Höhe des von dem Rahmen zur Anordnung von Vorrichtungen freigegebenen Querschnitts einstellbar sein.

Um ein vorteilhaftes Verbinden der Vorrichtung zu ermöglichen, können die Verbindungsbereiche der Vorrichtungen einen definierten Abstand zu einer Seitenfläche, einer Oberfläche, einer Unterfläche, einer Vorderfläche und/oder einer Hinterfläche der Vorrichtung aufweisen. Auf diese Weise können auch Vorrichtungen mit unterschiedlicher Dimensionierung derart miteinander verbunden werden, dass in verbundenem Zustand wenigstens eine Fläche einer Vorrichtung fluchtend zu wenigstens einer Fläche der anderen Vorrichtung angeordnet ist.

Vorzugsweise weisen die Vorrichtungen jeweils wenigstens einen ersten Verbindungsbereich auf, wobei in einem Zustand, in dem zwei Vorrichtungen über ein Zusammenwirken wenigstens eines separaten Verbindungselements mit den ersten Verbindungsbereichen miteinander verbunden sind, eine Oberfläche und/oder eine Unterfläche der Vorrichtungen fluchtend zueinander angeordnet sind.

Vorzugsweise weisen die Vorrichtungen zweite Verbindungsbereiche auf, wobei in einem Zustand, in dem zwei Vorrichtungen über ein Zusammenwirken wenigstens eines separaten Verbindungselements mit den zweiten Verbindungsbereichen miteinander verbunden sind, wenigstens eine Seitenfläche der Vorrichtungen fluchtend zueinander angeordnet sind.

Bei einer vorteilhaften Ausführung eines Sets an Vorrichtungen nach der Erfindung können die Vorrichtungen dritte Verbindungsbereiche aufweisen, wobei in einem Zustand, in dem zwei Vorrichtungen über ein Zusammenwirken wenigstens eines separaten Verbindungselements mit den dritten Verbindungsbereichen miteinander verbunden sind, zwei Vorrichtungen in Längsrichtung hintereinander angeordnet sind. Auf diese Weise können insbesondere zwei Vorrichtungen mit im Wesentlichen identischen Querschnitt miteinander verbunden werden und ein Durchgang mit einer vergrößerten Länge erzielt werden. Eine Länge in Längsrichtung der beiden derartig miteinander verbundenen Vorrichtungen kann sich voneinander unterscheiden.

Bei einer vorteilhaften Ausführung der Erfindung sind die separaten Verbindungselemente zur Verbindung der Vorrichtungen über die ersten Verbindungsbereiche und die zweiten Verbindungsbereiche und/oder die dritten Verbindungsbereiche ausgeführt. Hierdurch ist eine einzige Bauart an Verbindungselement ausreichend, um verschiedene Vorrichtungen in verschiedenen Bereichen miteinander zu verbinden.

Weitere Vorteile ergeben sich aus der folgenden Figurenbeschreibung. In den Figuren sind Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Kurzbeschreibung der Zeichnungen

Ausführungsformen werden nachfolgend anhand der beigefügten Zeichnungen näher erläutert. In den Figuren sind gleiche und gleichartige Komponenten mit gleichen Bezugszeichen beziffert.

Es zeigen:
- Fig. 1: eine Schnittansicht einer Vorrichtung zur Durchführung von Leitungen, Rohren und/oder Kabeln durch einen Gebäudeteil mit einem Durchlasskanal, wobei die Vorrichtung mit zwei miteinander in Wirkverbindung bringbaren Teilen ausgeführt ist und in einem unbeladenem Zustand, in dem keine Leitung oder dergleichen durch die Vorrichtung geführt ist, gezeigt ist;
- Fig. 2: eine Schnittansicht der Vorrichtung gemäß Fig. 1, wobei die Vorrichtung in einem beladenen Zustand mit einer durch die Vorrichtung geführten Leitung gezeigt ist;
- Fig. 3: eine Schnittansicht eines Teils der Vorrichtung gemäß Fig. 1 und Fig. 2;
- Fig. 4: eine dreidimensionale Ansicht eines Sets an Vorrichtungen mit vorliegend vier Vorrichtungen, wobei die Vorrichtung im Wesentlichen den Aufbau der Vorrichtung 1 gemäß Fig. 1 bis Fig. 3 aufweisen, aber sich ggf. hinsichtlich der Querschnitte voneinander unterscheiden;

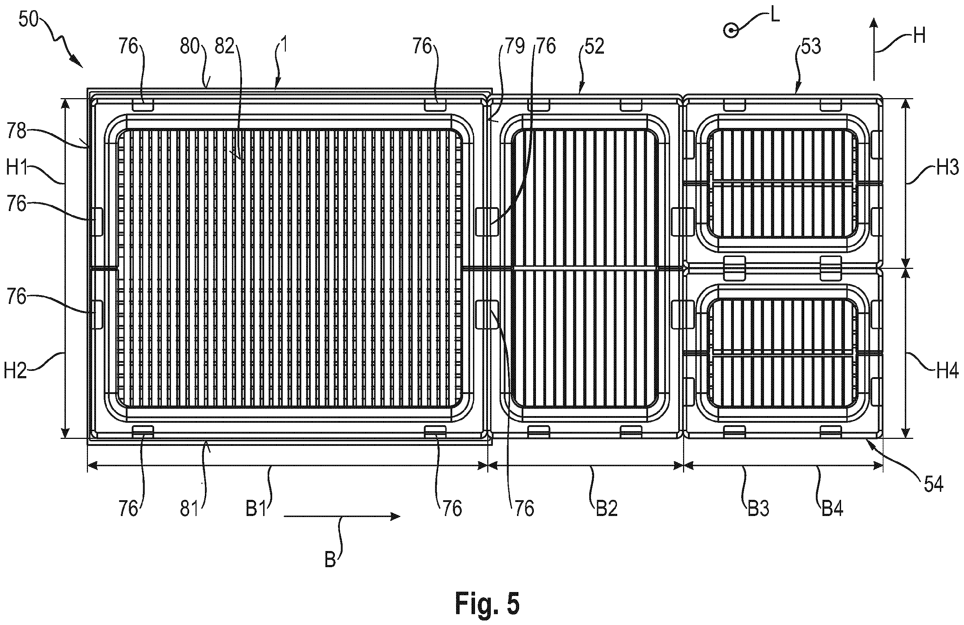

- Fig. 5: eine Frontansicht des Sets an Vorrichtungen gemäß Fig. 4;
- Fig. 6: eine vereinfachte dreidimensionale Ansicht von zwei Vorrichtungen, die in Längsrichtung miteinander verbunden sind;

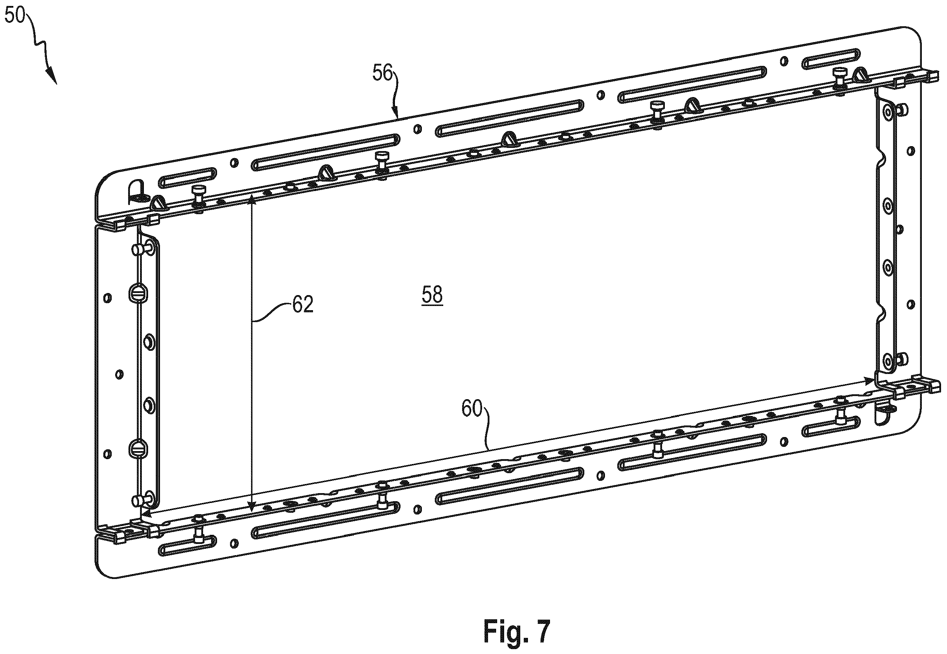

- Fig. 7: eine vereinfachte dreidimensionale Darstellung eines Rahmens des Sets, wobei verschiedene Vorrichtungen in einem Innenquerschnitt der Rahmens anordenbar sind;
- Fig. 8: eine vereinfachte dreidimensionale Ansicht eines Verbindungselements zur Verbindung von zwei Vorrichtungen gemäß Fig. 1 bis Fig. 7;
- Fig. 9: eine Schnittansicht des Verbindungselements gemäß Fig. 8;
- Fig. 10: eine vereinfachte Schnittansicht eines Ausschnitts von zwei Vorrichtungen, wobei das Verbindungselement in einem nicht mit den Vorrichtungen verbundenen Zustand gezeigt ist; und
- Fig. 11: eine vereinfachte Schnittansicht des Ausschnitts gemäß Fig. 10, wobei das Verbindungselement in einem die Vorrichtungen miteinander verbindenden Zustand gezeigt ist.

### Beschreibung von Ausführungsformen

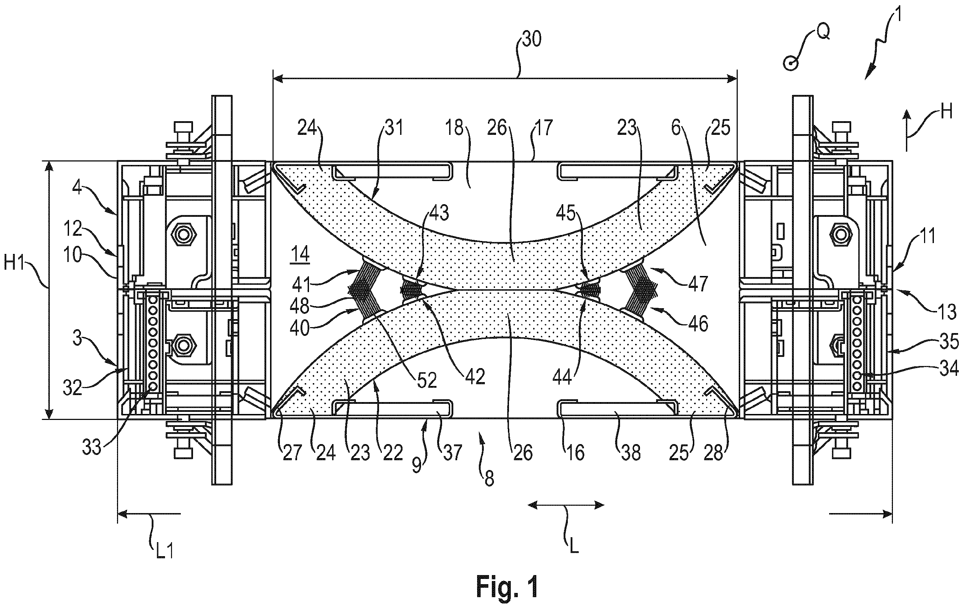

Fig. 1 bis Fig. 3 zeigen eine Vorrichtung 1 zur Durchführung von einer oder mehrerer Leitungen, Rohre, Kabel oder dergleichen, wie beispielsweise Stromleitungen, Wasserleitungen, Gasleitungen und dergleichen, durch einen Gebäudeteil, wie z. B. eine Gebäudewand, eine Decke und einen Boden.

Die Vorrichtung 1 erfordert keine manuelle Öffnung bzw. Schließung, um Leitungen oder dergleichen durch die Vorrichtung 1 zu führen. Diese können vielmehr ohne weitere Maßnahmen durch die Vorrichtung 1 geführt werden.

Die Vorrichtung 1 ist vorliegend mit zwei jeweils einen im Wesentlichen U-förmigen Querschnitt aufweisenden Teilen 3, 4 ausgeführt, die gemäß Fig. 1 lösbar aneinander anordenbar sind. Der erste Teil 3 und der zweite Teil 4 sind im Wesentlichen identisch zueinander ausgeführt. In miteinander verbundenen Zustand der Teile 3, 4 wird von der Vorrichtung 1 ein in Längsrichtung L verlaufender axialer Durchlasskanal 6 gebildet, der sich von einem ersten axialen Ende 10 bis zu einem zweiten axialen Ende 11 erstreckt und zumindest im Bereich der Enden 10, 11 eine für Leitungen oder dergleichen durchgängige Öffnung 12, 13 aufweist.

Bei alternativen Ausführungen kann die Vorrichtung auch einteilig ausgeführt sein.

Die Vorrichtung 1 weist ein Gehäuse 8 mit einer Gehäusewand 9 auf, wobei die Gehäusewand den axialen Durchlasskanal 6 bildet und einen Innenraum 14 der Vorrichtung 1 begrenzt. Das Gehäuse 8 weist vorliegend einen im Wesentlichen rechteckigen Querschnitt auf, der in montiertem Zustand der Vorrichtung 1 durch vier Wände 16, 17, 18 gebildet ist. Eine erste Wand 16 liegt dabei einer zweiten Wand 17 gegenüber und erstreckt sich in einer von der Längsrichtung L und einer Querrichtung Q aufgespannten Ebene. Die jeweils aus einem Wandstück des ersten Teils 3 und einem Wandstück des zweiten Teils 4 gebildeten weiteren Wände 18 sind wiederum einander gegenüberliegend und verbinden die Wände 16 und 17. Die weiteren Wände 18 erstrecken sich in einer von einer Hochrichtung H und der Querrichtung Q aufgespannten Ebene.

Die Längsrichtung L, die Hochrichtung H und die Querrichtung Q stehen dabei jeweils senkrecht aufeinander. Ein Querschnitt der Vorrichtung 1 ist durch eine Erstreckung der Vorrichtung 1 in Hochrichtung H und eine Erstreckung der Vorrichtung 1 in Querrichtung Q definiert.

Die Vorrichtung 1 weist eine Länge L1 in Längsrichtung L, eine Breite B1 in Querrichtung Q und eine Höhe H1 in Hochrichtung H auf, wobei jeder Teil 3, 4 hier eine Höhe aufweist, die der Hälfte der Höhe H1 entspricht. Ein Verhältnis aus der Breite B1 zu der Höhe H1 ist grundsätzlich frei wählbar, wobei die Breite B1 vorliegend etwa doppelt so groß wie die Höhe H1 ist. Die Vorrichtung 1 weist entsprechend einen rechteckigen Querschnitt auf.

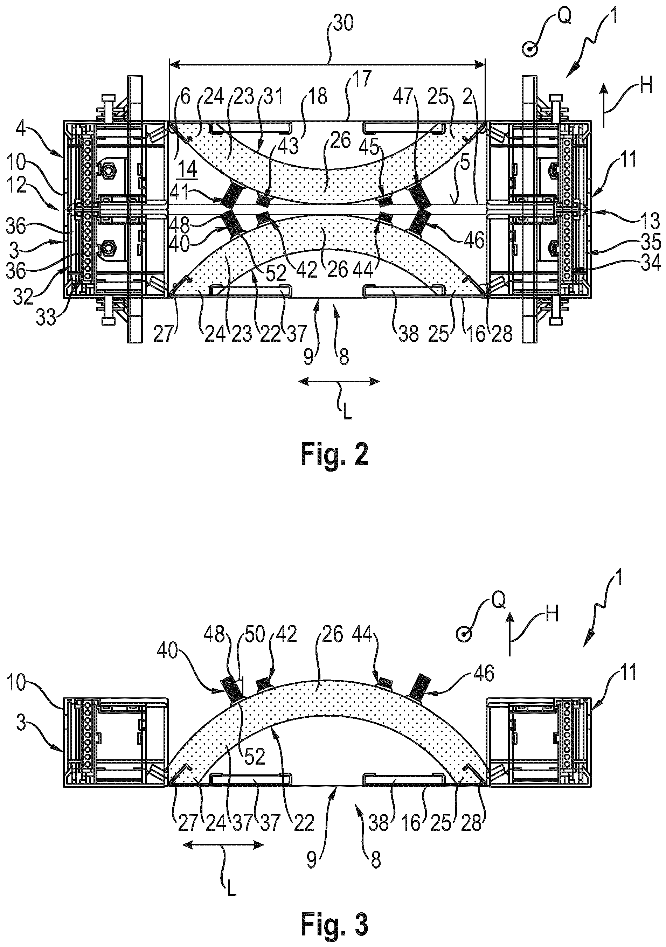

Da der erste Teil 3 und der zweite Teil 4 im Wesentlichen vergleichbar zueinander ausgeführt sind, wird im Folgenden der in Fig. 3 in Alleinstellung gezeigte erste Teil 3 stellvertretend für den zweiten Teil 4 beschreiben.

Der erste Teil 3 weist eine erste Dichteinrichtung 22 auf, die hier mit einem plattenförmigen Schaumstoffelement 23 ausgeführt ist. Das plattenförmige Schaumstoffelement 23 ist quer zur Längsrichtung L gebogen, so dass ein erster Endbereich 24 des plattenförmigen Schaumstoffelements 23 und ein zweiter, dem ersten Endbereich 24 gegenüberliegender Endbereich 25 des plattenförmigen Schaumstoffelements 23 jeweils im Bereich der ersten Wand 16 angeordnet sind. Hierzu ist jeweils eine als Halteklammer 27 bzw. 28 ausgeführte Halteeinrichtung vorgesehen, mittels welcher die Endbereiche 24 und 25 des Schaumstoffelements 23 an der ersten Wand 16 festgelegt sind. Ein zwischen den Endbereichen 24 und 25 angeordneter mittlerer Bereich 26 des Schaumstoffelements 23 erstreckt sich in montiertem Zustand der Vorrichtung 1 ausgehend von der ersten Wand 16 in Richtung der zweiten Wand 17 in den Innenraum 14.

Neben der gezeigten Ausführung mit einem gebogenen plattenförmigen Schaumstoffelements kann es auch vorgesehen sein, dass ein bereits vorgeformtes Schaumstoffelement zum Einsatz kommt, welches beispielsweise eine vergleichbare gebogene Form wie das Schaumstoffelement 23 aufweisen kann oder trapezartig ausgeführt sein kann.

Vorliegend sind in einem Erstreckungsbereich 30 des Schaumstoffelements 23 in Längsrichtung L zwischen den Endbereichen 24 und 25 zwei intumeszierende Elemente 37, 38 mit der ersten Wand 16 verbunden, die in einem Brandfall für ein Verschließen des Innenraums 14 sorgen sollen. Alternativ oder zusätzlich hierzu können auch weitere intumeszierende Elemente, beispielsweise in den axialen Endbereichen 10, 11 der Vorrichtung 1 angeordnet sein.

Vorliegend entspricht der Erstreckungsbereich 30 des Schaumstoffelements 23 des ersten Teils 3 in Längsrichtung L einem Erstreckungsbereich 30 des Schaumstoffelements 23 des zweiten Teils 4, so dass der gemeinsame Erstreckungsbereich 30 in Längsrichtung L den einzelnen Erstreckungsbereichen 30 entspricht.

Bei alternativen Ausführungen können sich die Erstreckungsbereiche der Schaumstoffelemente der einzelnen Teile voneinander unterscheiden, wobei ein gemeinsamer Erstreckungsbereich durch eine Schnittmenge der Erstreckungsbereiche der einzelnen Schaumstoffelemente in Längsrichtung L definiert ist.

Wie in Fig. 1 bis Fig. 3 vereinfacht ersichtlich ist, sind im Bereich der axialen Enden 10, 11 der Vorrichtung 1 jeweils zwei Dichtanordnungen 32, 33, 34, 35 vorgesehen, die hier jeweils eine senkrecht zu der Längsrichtung L stehende Dichtebene bilden und die jeweils mit einer Vielzahl von einander unmittelbar benachbarten, länglich ausgeführten Dichtelemente 26 ausgeführt sind.

Die Dichtelemente 26 weisen vorliegend einen im Wesentlichen kreisförmigen Querschnitt auf, sind flexibel und elastisch ausgeführt und weisen eine Erstreckung in ihrer Längsrichtung auf, die um ein Vielfaches größer als der Querschnitt der Dichtelemente 26 ist. Die Dichtelemente 26 sind hier als elastische Lamellen mit einer Kunststofffaser aus Polypropylen oder Polyethylen ausgeführt, können bei alternativen Ausführungen aber auch als Bürsten, Borsten, Streifen, Bänder, Schlauchelemente oder dergleichen ausgeführt sein und andere Materialien, wie beispielsweise Metall, Kautschuk, biologische Materialien oder dergleichen aufweisen.

Die Dichtelemente 26 können auch mit Gewebe, Gelege oder Papiermaterialien ausgeführt sein, die flexibel sind, sich gut an einer Mantelfläche einer durch die Vorrichtung 1 geführten Leitung oder dergleichen anlegen können und möglichst eine elastische Kraft auf die Mantelfläche ausüben, um einen möglichst dichten Verschluss im Bereich um die Mantelfläche der Leitung zu gewährleisten. Die Dichtelemente 26 können weiterhin ein intumeszierendes Material aufweisen und beispielsweise mit einem intumeszierenden Material beschichtet sein oder ein intumeszierendes Material umschließen, und insbesondere ein mit intumeszierendem Material versehenes Papier umfassen.

Die Dichtelemente 26 der ersten Dichtanordnung 32 verlaufen dabei senkrecht zu den Dichtelementen 26 der zweiten Dichtanordnung 33. Analog hierzu sind die Dichtelemente 26 der dritten Dichtanordnung 34 und der vierten Dichtanordnung 35 ausgeführt, die im Bereich des zweiten axialen Endes 11 der Vorrichtung 1 angeordnet sind.

Wird eine Leitung 2, ein Rohr, ein Kabel oder dergleichen durch die Vorrichtung 1 geführt, werden die Dichtelemente 26 der Dichtanordnungen 32, 33, 34, 35 derart umgebogen, dass diese an einer Mantelfläche 5 einer durch die Vorrichtung 1 geführten Leitung 2 anliegen und hierdurch gegen einen Durchtritt von Brandgasen und Rauch abdichten und zudem eine gewisse Blickdichtigkeit erzielen.

In Fig. 1 bis Fig. 3 ist weiterhin eine dritte Dichteinrichtung 40, eine fünfte Dichteinrichtung 42, eine siebte Dichteinrichtung 44 und eine neunte Dichteinrichtung 46 ersichtlich, die jeweils an der ersten Dichteinrichtung 22 angeordnet sind. Analog hierzu sind an einer zweiten, an dem zweiten Teil 4 angeordneten Dichteinrichtung 31 eine vierte Dichteinrichtung 41, eine sechste Dichteinrichtung 43, eine achte Dichteinrichtung 45 und eine zehnte Dichteinrichtung 47 angeordnet. Sämtliche Dichteinrichtungen 40 bis 47 sind vorliegend vollständig innerhalb des gemeinsamen Erstreckungsbereichs 30 angeordnet.

Im Folgenden werden die dem Teil 3 zugeordneten Dichteinrichtungen 40, 42, 44, 46 stellvertretend für die dem Teil 4 zugeordneten Dichteinrichtungen 41, 43, 45, 47 beschrieben.

Die Dichteinrichtungen 40, 42, 44, 46 weisen vorliegend jeweils eine Vielzahl von Dichtelementen 48 auf, die vergleichbar zu den Dichtelementen 36 ausgeführt sein können. Bevorzugt sind die Dichtelemente 48 als Haare einer Bürste ausgeführt, wobei die Haare 48 der Bürste insbesondere in unbeladenem Zustand der Vorrichtung 1 insbesondere eine gemeinsame Längserstreckungsrichtung aufweisen. Vorliegend steht die Längserstreckungsrichtung der Haare nicht senkrecht zu der Längsrichtung L der Vorrichtung 1, sondern schließt mit einer quer zur Längsrichtung L stehenden Querebene Q einen Winkel 50 ein, der beispielsweise zwischen 0° und 45°, beispielsweise etwa 30° betragen kann.

Die Haare 48 der Bürsten sind hier jeweils an einem Haltelement 52 angeordnet, mittels dem die Bürsten direkt auf dem ersten Schaumstoffelement 23 angeordnet, insbesondere angeklebt sind. Vorliegend sind die dritte Dichteinrichtung 40 und die fünfte Dichteinrichtung 42 auf einer der ersten Öffnung 12 der Vorrichtung 1 zugewandten Seite des mittleren Bereichs 26 des Schaumstoffelements 23 und die siebte Dichteinrichtung 44 und die neunte Dichteinrichtung 46 auf einer der zweiten Öffnung 13 der Vorrichtung 1 zugewandten Seite des mittleren Bereichs 26 des Schaumstoffelements 23 angeordnet. Eine Länge der Dichtelemente 48 der fünften Dichteinrichtung 42 und der siebten Dichteinrichtung 44, die näher an dem mittleren Bereich 26 des Schaumstoffelements 23 angeordnet sind als die dritte Dichteinrichtung 40 und die neunte Dichteinrichtung 46 ist dabei kürzer als die Länge der Dichtelemente 48 der dritten Dichteinrichtung 40 und der neunten Dichteinrichtung 46.

Die Dichtelemente 48 der miteinander zusammenwirkenden Dichteinrichtungen 40 bis 47 des ersten Teils 3 und des zweiten Teils 4 greifen in montiertem Zustand der unbeladenen Vorrichtung 1 kammartig ineinander. Bei alternativen Ausführungen kann es auch vorgesehen sein, dass die Endbereiche der Dichtelemente der miteinander zusammenwirkenden Dichteinrichtungen in unbeladenem Zustand der Vorrichtung 1 bündig aufeinander aufstehen.

Wie in Fig. 1 näher ersichtlich ist, greifen in unbeladenem Zustand der Vorrichtung 1 miteinander zusammenwirkende Dichtelemente 48 der Dichteinrichtungen 40 bis 47 kammartig ineinander. Zudem liegen die mittleren Bereiche 26 der Schaumstoffelemente 23 über einen gewissen Erstreckungsbereich in Längsrichtung L der Vorrichtung 1 aneinander an, so dass in unbeladenem Zustand der Vorrichtung 1 eine gute Gasdichtigkeit erzielt ist.

Im beladenen Zustand gemäß Fig. 3 wird neben der Dichtanordnungen 32 bis 35 auch im Bereich der Schaumstoffelemente 23 und im Bereich der Dichteinrichtungen 40 bis 47 gegenüber der durch die Vorrichtung 1 geführten Leitung 2 abgedichtet und ein Gasdurchtritt sicher verhindert bzw. ist eine Gasdurchtritt stark reduziert.

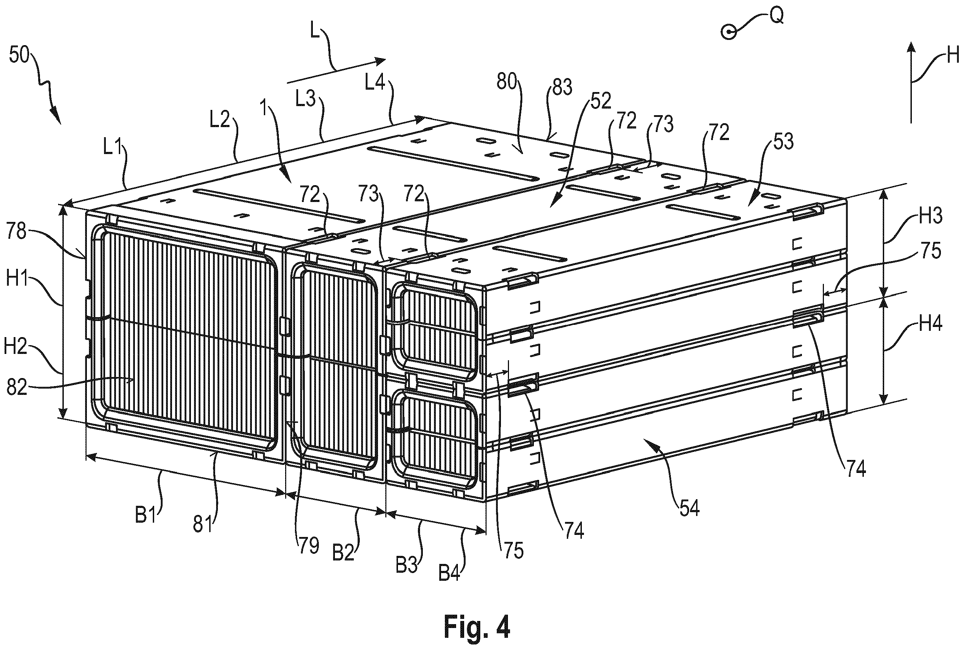

Fig. 4 zeigt ein Set an Vorrichtungen 50, welches vorliegend mit vier Vorrichtungen 1, 52, 53, 54 ausgeführt ist. Das Set an Vorrichtungen 50 weist hier darüber hinaus einen Rahmen 56 bzw. Wandflansch auf, wobei die Vorrichtungen 1, 52, 53, 54 in einem von dem Rahmen 56 definierten Innenquerschnitt 58 bzw. Aufnahmeraum anordenbar sind. Der Innenquerschnitt 58 des Rahmens 56 ist gegebenenfalls flexibel einstellbar, so dass beispielsweise eine Breite 60 des Innenquerschnitts 58 in Querrichtung Q und/oder einen Höhe 62 des Innenquerschnitts 58 in Hochrichtung H variabel einstellbar ist. In dem Innenquerschnitt 58 des Rahmens 56 sind wenigstens zwei unterschiedlich dimensionierte Vorrichtungen 1, 52, 53, 54 anordenbar.

Insbesondere sind zwei Rahmen 56 vorgesehen, um die Vorrichtungen 1, 52, 53, 54 auf einfache Weise beidseits eines Gebäudeteils, insbesondere einer Wand oder einer Decke, anordnen zu können.

Das Set an Vorrichtungen 50 weist gemäß der Ausführung nach Fig. 4 vorliegend drei unterschiedlich dimensionierte Vorrichtungen 1, 52, 53 und 54 auf, wobei die Vorrichtungen 53 und 54 vorliegend den gleichen Querschnitt aufweisen.

Die Vorrichtung 52 weist vorliegend eine Höhe H2 in Hochrichtung auf, die der Höhe H1 der Vorrichtung 1 entspricht. Eine Breite B2 der Vorrichtung 52 entspricht vorliegend der Hälfte der Breite B1 der Vorrichtung 1, wobei die Breite B2 grundsätzlich einen beliebigen, von der Breite B1 der Vorrichtung 1 abweichenden Wert annehmen kann. Die Länge L2 der Vorrichtung 52 ist vorliegend im Wesentlichen identisch zu der Länge L1 der Vorrichtung 1.

Die Vorrichtungen 53, 54 weisen eine Länge L3 auf, die ebenfalls der Länge L1 der Vorrichtung 1 entspricht. Eine Breite B3 der Vorrichtungen 53, 54 entspricht vorliegend der Breite B2 der Vorrichtung 52 und entspricht somit der Hälfte der Breite B1 der Vorrichtung 1. Eine Höhe H3 der Vorrichtungen 53, 54 entspricht vorliegend der Hälfte der Höhe H1 der Vorrichtung 1 bzw. einer Hälfte der Höhe H2 der Vorrichtung 52. Eine Anordnung der beiden Vorrichtungen 53 und 54 in Hochrichtung H übereinander weist somit eine der Vorrichtungen 1 und 52 entsprechende Höhe H1 bzw. H2 auf.

Besonders bevorzugt weist das Set an Vorrichtungen Vorrichtungen auf, deren Höhen H1 einen ganzzahligen Teiler der Höhe 62 des Innenquerschnitts 58 im Wesentlichen entspricht, so dass eine Anordnung von einer entsprechenden Anzahl an Vorrichtungen in Hochrichtung H übereinander die gesamte Höhe 62 des Innenquerschnitts 58 auffüllt.

Neben der Ausführung von Vorrichtungen mit einem rechteckigen Querschnitt können bei dem Set an Vorrichtungen grundsätzlich auch Vorrichtungen mit einem quadratischen Querschnitt zum Einsatz kommen.

Besonders bevorzugte Querschnittsverhältnisse von Vorrichtungen eines Sets an Vorrichtungen sind in den Folgenden Tabellen aufgeführt:

**Tabelle 1**

| Größenverhältnisse von Vorrichtungen mit einem insbesondere rechteckigen Querschnitt | | | | | |
|---|---|---|---|---|---|
| | Dimensionierung 1 | Dimensionierung 2 | Dimensionierung 3 | Dimensionierung 4 | Dimensionierung 5 |
| Breite | 8 | *B*/*2* | *B*/*2* | *B*/*4* | *B*/*4* |
| Höhe | *H* | *H* | *H*/*2* | *H*/*2* | *H*/*4* |

**Tabelle 2**

| Größenverhältnisse von Vorrichtungen mit einem insbesondere quadratischen Querschnitt | | | |
|---|---|---|---|
| | Dimensionierung 1 | Dimensionierung 2 | Dimensionierung 3 |
| Breite | *B=H* | *2B*/*3* | *B*/*3* |
| Höhe | *H=B* | *2H*/*3* | *H*/*3* |

Grundsätzlich kann es vorgesehen sein, dass das Set an Vorrichtungen auch lediglich zwei verschieden dimensionierte Vorrichtungen aufweist und sich die Vorrichtungen in ihrem Aufbau unterscheiden. Darüber hinaus kann das Set an Vorrichtungen auch eine größere Zahl an unterschiedlich dimensionierten Vorrichtungen aufweisen.

Auch eine Anzahl von Vorrichtungen mit den gleichen Dimensionen ist grundsätzlich frei wählbar, so dass beispielsweise alle Vorrichtungen unterschiedliche Dimensionierungen bzw. Ausmaße aufweisen. Eine Anzahl von Vorrichtungen mit den gleichen Dimensionen ist beliebig wählbar, so dass jede Vorrichtung einmal, zweimal, dreimal oder mehrmals zum Einsatz kommen kann.

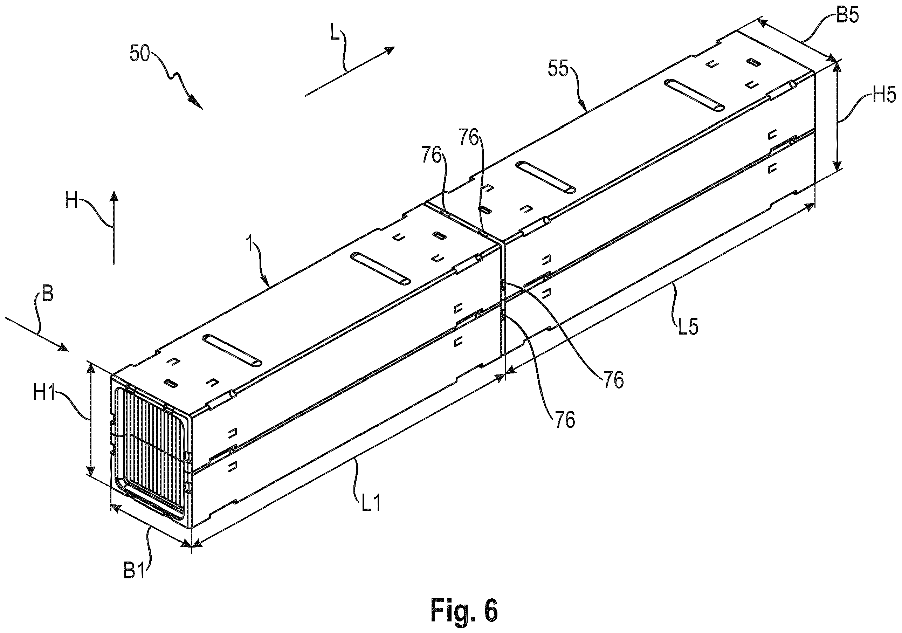

Neben der Anordnung von verschiedenen Vorrichtungen 1, 52, 53, 54 in Querrichtung Q und/oder Hochrichtung H nebeneinander, kann es auch vorgesehen sein, dass verschiedene Vorrichtungen 1, 52, 53, 54 in Längsrichtung L hintereinander angeordnet werden. Hierbei werden Vorrichtungen mit einem im Wesentlichen identischen Querschnitt verwendet. In Fig. 6 ist beispielsweise die Anordnung von zwei Vorrichtungen 1 und 55 in Längsrichtung L hintereinander gezeigt, wobei die Vorrichtung 55 im Wesentlichen der Vorrichtung 1 entspricht.

Alternativ hierzu kann es auch vorgesehen sein, dass die Vorrichtung 55 im Wesentlichen dem Aufbau der Vorrichtung 1 entspricht, allerdings eine Länge L4 aufweist, die von der Länge L1 abweicht. Die Länge L4 kann beispielsweise der Hälfte der Länge L1 entsprechen. Grundsätzlich kann die Länge L4 der Vorrichtung 55 einen beliebigen Wert im Verhältnis zur Länge L1 der Vorrichtung 1 annehmen.

Die Vorrichtungen 1, 52, 53, 54, 55 weisen jeweils zwei in Querrichtung weisende Seitenflächen 78 und 79 auf, die jeweils an eine Oberfläche 80 und eine Unterfläche 81 grenzen.

Vorliegend weist jede Vorrichtung 1, 52, 53, 54, 55 erste Verbindungsbereiche 72, zweite Verbindungsbereiche 74 und dritte Verbindungsbereiche 76 auf, wobei zwei Vorrichtungen 1, 52, 53, 54, 55 über später näher beschriebenen Verbindungselemente 70 lösbar miteinander verbindbar sind. Die ersten Verbindungsbereiche 72 sind zur Verbindung von zwei Vorrichtungen 1, 52, 53, 54, 55 in Querrichtung Q über ein Zusammenwirken mittels eines oder mehrerer Verbindungselemente 70 vorgesehen. Über die zweiten Verbindungsbereiche 74 können zwei Vorrichtungen 1, 52, 53, 54, 55 mittels eines oder mehrere Verbindungselemente 70 in Hochrichtung H miteinander verbunden werden. Schließlich können zwei Vorrichtungen 1, 52, 53, 54, 55 über ein Zusammenwirken von wenigstens einem Verbindungselement mit den dritten Verbindungsbereichen 76 in Längsrichtung L lösbar miteinander verbunden werden.

Die Vorrichtungen 1, 52, 53, 54, 55 können dabei jeweils einen oder mehrere, insbesondere zwei oder vorzugsweise vier Verbindungsbereiche 72, 74, 76 aufweisen, über die zwei Vorrichtungen 1, 52, 53, 54, 55 mittels eines oder mehrerer Verbindungselements 70 in Querrichtung Q, in Hochrichtung H oder in Längsrichtung L miteinander lösbar verbindbar sind.

Vorliegend ist es vorgesehen, dass gleichartige Vorrichtungen 1, 52, 53, 54, 55 und auch verschieden dimensionierte Vorrichtungen 1, 52, 53, 54, 55 sowohl in Querrichtung Q, in Hochrichtung H und in Längsrichtung L mittels identisch ausgeführter Verbindungselemente 70 miteinander lösbar verbindbar sind, wobei in Längsrichtung L miteinander zu verbindende Vorrichtungen 1, 52, 53, 54, 55 insbesondere einen im Wesentlichen identischen Querschnitt aufweisen.

Zur Verbindung von zwei Vorrichtungen 1, 52, 53, 54, 55 in Querrichtung Q weisen die Vorrichtungen 1, 52, 53, 54, 55 jeweils in einem Übergangsbereich einer Seitenfläche 78 bzw. 79 zu der Oberfläche 80 und zu der Unterfläche 81 vorliegend jeweils zwei erste Verbindungsbereiche 72 auf, so dass jede Vorrichtung vorliegend acht erste Verbindungsbereiche 72 aufweist. Ein Abstand 73 von dem ersten axialen Endes 10 zugeordneten ersten Verbindungsbereichen 72 von dem ersten axialen Ende 10 und ein Abstand 73 von dem zweiten axialen Ende 11 zugeordneten ersten Verbindungsbereichen 72 von dem zweiten axialen Ende 11 ist vorliegend für alle ersten Verbindungsbereiche 72 im Wesentlichen identisch und vorliegend auch bei allen Vorrichtungen 1, 52, 53, 54, 55 im Wesentlichen identisch.

Wie in Fig. 4 teilweise näher ersichtlich ist, sind beispielsweise die Vorrichtung 1 und die Vorrichtung 52 über vier, jeweils mit entsprechenden ersten Verbindungsbereichen 72 zusammenwirkenden Verbindungselemente 70 miteinander lösbar verbindbar. Zwei Verbindungselemente 70 wirken vorliegend im Bereich von Oberflächen 80 und zwei Verbindungselemente 70 im Bereich von Unterflächen 81 mit den Vorrichtungen 1 und 52 zusammen. Im miteinander verbundenen Zustand sind Oberflächen 80 und Unterflächen 81 der Vorrichtungen 1 und 52 im Wesentlichen fluchtend zueinander angeordnet.

Zur Verbindung von zwei Vorrichtungen 1, 52, 53, 54, 55 in Hochrichtung H weisen die Vorrichtungen 1, 52, 53, 54, 55 jeweils in einem Übergangsbereich einer Seitenfläche 78 bzw. 79 zu der Oberfläche 80 und zu der Unterfläche 81 vorliegend jeweils zwei zweite Verbindungsbereiche 74 auf, so dass jede Vorrichtung 1, 52, 53, 54, 55 vorliegend acht erste Verbindungsbereiche 74 aufweist. Ein Abstand 75 von dem ersten axialen Endes 10 zugeordneten zweiten Verbindungsbereichen 74 von dem ersten axialen Ende 10 und ein Abstand 75 von dem zweiten axialen Ende 11 zugeordneten zweiten Verbindungsbereichen 74 von dem zweiten axialen Ende 11 ist vorliegend für alle zweiten Verbindungsbereiche 74 im Wesentlichen identisch und vorliegend auch bei allen Vorrichtungen 1, 52, 53, 54, 55 im Wesentlichen identisch.

Die ersten Verbindungsbereiche 72 und die zweiten Verbindungsbereiche 74 sind vorliegend jeweils durch Materialausnehmungen in der Gehäusewand 9 der Vorrichtungen 1, 52, 53, 54, 55 gebildet, wobei die ersten Verbindungsbereiche 72 und die zweiten Verbindungsbereiche 74 durch identische Materialausnehmungen gebildet sind und somit in identischen Bereichen der Vorrichtungen 1, 52, 53, 54, 55 angeordnet sind.

Wie in Fig. 4 teilweise näher ersichtlich ist, sind beispielsweise die Vorrichtung 53 und die Vorrichtung 54 über vier, jeweils mit entsprechenden zweiten Verbindungsbereichen 74 zusammenwirkenden Verbindungselemente 70 miteinander lösbar verbindbar. Zwei Verbindungselemente 70 wirken vorliegend im Bereich jeder Seitenfläche 78 und 79 mit den Vorrichtungen 53 und 54 zusammen. Im miteinander verbundenen Zustand sind Seitenflächen 78 und 79 der Vorrichtungen 53 und 54 im Wesentlichen fluchtend zueinander angeordnet.

Zur Verbindung von zwei Vorrichtungen 1, 52, 53, 54, 55 in Längsrichtung L miteinander, wie beispielsweise in Fig. 6 ersichtlich ist, sind im Bereich jedes axialen Endes 10 bzw. 11 vorliegend jeweils acht dritte Verbindungsbereiche 76 vorgesehen. Jeweils zwei dritte Verbindungsbereiche 76 sind in einem Übergangsbereich einer Seitenfläche 78 bzw. 79, der Oberfläche 80 bzw. der Unterfläche 81 zu einer Vorderfläche 82 bzw. einer Hinterfläche 83 der Vorrichtung 1, 52, 53, 54, 55 angeordnet. Zwei in Längsrichtung L miteinander verbundene Vorrichtungen 1, 52, 53, 54, 55 weisen insbesondere einen im Wesentlichen identischen Querschnitt auf, wobei insbesondere alle dritten Verbindungsbereiche 76 an identischen Positionen vorgesehen sind.

Auch die dritten Verbindungsbereiche 76 sind vergleichbar zu den ersten Verbindungsbereichen 72 und den zweiten Verbindungsbereichen 74 hier jeweils durch Materialausnehmungen in der Gehäusewand 9 der Vorrichtungen 1, 52, 53, 54, 55 gebildet.

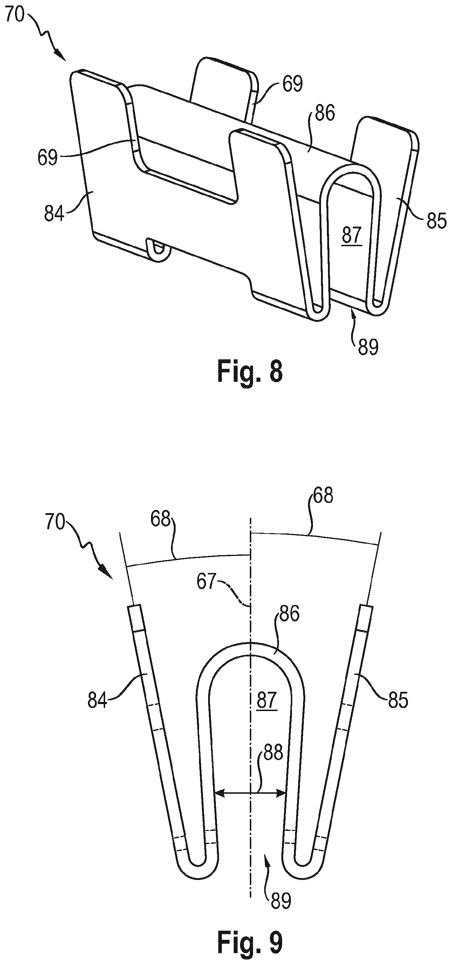

Das in Fig. 8 und Fig. 9 in Alleinstellung gezeigte Verbindungselemente 70 weist einen W-förmigen Querschnitt auf. Jeweils ein seitlicher Schenkel 84 bzw. 85 ist dabei federnd an einen mittleren, im Querschnitt U-förmigen Bereich 86 angebunden, der einen Aufnahmebereich 89 bildet. Die Schenkel 84, 85 weisen jeweils zu einer Mittelachse 67 des Verbindungselements 70 einen Winkel 68 auf, der beispielsweise etwa 20° beträgt. Der mittlere U-förmige Bereich 86 bildet eine Ausnehmung 87 mit einer Breite 88.

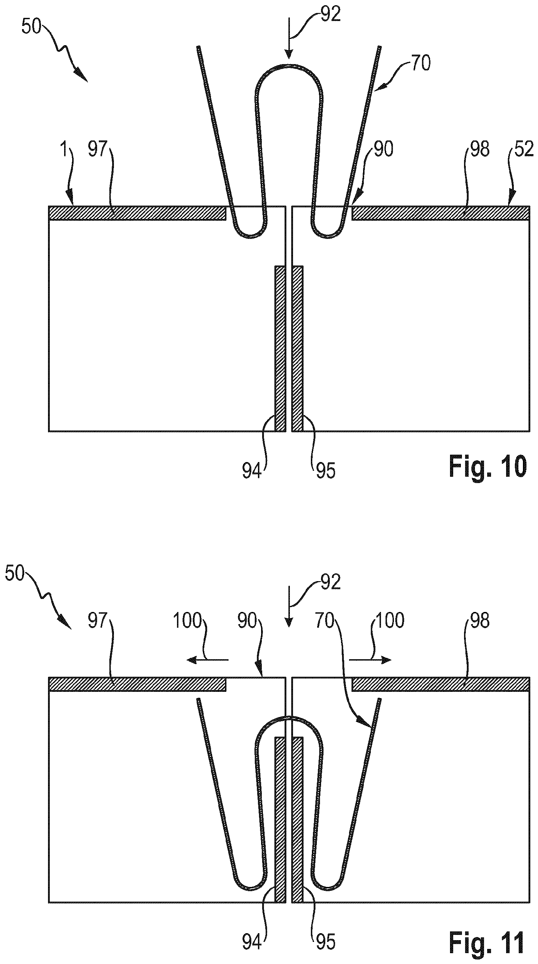

In Fig. 10 und Fig. 11 ist stark vereinfacht exemplarisch ein erster Verbindungsbereich 72 der Vorrichtung 1 und ein erster Verbindungsbereich 72 der Vorrichtung 52 gezeigt, über die die Vorrichtungen 1 und 52 in Querrichtung Q miteinander lösbar verbindbar sind. Hierbei ist ersichtlich, dass die Vorrichtungen 1 und 52 bei entsprechender Ausrichtung der Vorrichtungen 1 und 52 zueinander eine Einführöffnung 90 für das Verbindungselement 70 bilden, durch welche das Verbindungselement 70 ausgehend von dem Zwischenzustand in Fig. 8 in einer Einführrichtung 92 vollständig in Längsrichtung L in den Bereich der Vorrichtungen 1 und 52 einführbar ist. Im die Vorrichtungen 1 und 52 miteinander verbindenden Zustand gemäß Fig. 11 umfasst der U-förmige Bereich 86 des Verbindungselements 70 einen ersten Wandbereich 94 der Vorrichtung 1 und einen ersten Wandbereich 95 der Vorrichtung 52. Die Schenkel 84 und 85 werden beim Einführvorgang vorgespannt und entspannen sich im vollständig eingeführten Vorgang derart, dass die Schenkel 84 und 85 eine Bewegung des Verbindungselements 70 entgegen der Einführrichtung 92 durch einen entsprechenden Hinterschnitt in Wandungen der Vorrichtungen 1 und 52 verhindern. Das Verbindungselement 70 steht somit im mit den Vorrichtungen 1 und 52 verbundenen Zustand nicht über eine äußere Oberfläche der Vorrichtungen 1 und 52 hinaus.

Im in Fig. 11 gezeigten Zustand ist das Verbindungselement 70 in einem verrasteten Zustand gezeigt, in dem die Vorrichtungen 1 und 52 durch das Verbindungselement 70 miteinander verbunden sind und ein unbeabsichtigtes Lösen des Verbindungselements 70 sicher verhindert ist.

Das Verbindungselement 70 weist im Bereich jedes Schenkels 84 und 85 hier eine Ausnehmung 69 auf, über die das Verbindungselement 70 beispielsweise durch einen Eingriff eines Werkzeugs von dem verrasteten Zustand gemäß Fig. 11 in einen Zustand überführbar ist, in dem das Verbindungselement 70 entgegen der Einführrichtung 90 von den Vorrichtungen 1 und 52 lösbar ist.

Über die in Fig. 10 und Fig. 11 ersichtlichen zweiten Wandungsbereiche 97 und 98 sind die Vorrichtungen 1 und 52 über Verbindungselemente 70 in Hochrichtung H mit weiteren Vorrichtungen 1, 52, 53, 54, 55 verbindbar, wobei ein Verbindungselement 70 hierzu in Einführrichtung 100 in Eingriff mit den jeweiligen Vorrichtungen 1, 52, 53, 54, 55 ist.

## Patentansprüche

1. Set an Vorrichtungen (50), umfassend wenigstens zwei Vorrichtungen (1, 52, 53, 54, 55) zur Durchführung von Leitungen (2), Rohren und/oder Kabeln durch einen Gebäudeteil, jeweils aufweisend ein Gehäuse (8) mit einer Gehäusewand (9), wobei das Gehäuse (8) einen von der Gehäusewand (9) begrenzten, in Längsrichtung (L) verlaufenden axialen Durchlasskanal (6) aufweist, der an gegenüberliegenden Enden (10, 11) jeweils eine Öffnung (12, 13) aufweist, wobei die Vorrichtungen (1, 52, 53, 54, 55) eine Länge (L1, L2, L3, L4, L5) in Längsrichtung (L) und jeweils einen senkrecht zur Längsrichtung (L) angeordneten rechteckigen Querschnitt aufweisen, **dadurch gekennzeichnet, dass** die wenigstens zwei Vorrichtungen (1, 52, 53, 54, 55) jeweils wenigstens einen Verbindungsbereich (72, 74, 76) aufweisen, wobei wenigstens ein separates Verbindungselement (70) vorgesehen ist, mittels welchem die wenigstens zwei Vorrichtungen (1, 52, 53, 54, 55) in den Verbindungsbereichen (72, 74, 76) lösbar miteinander verbindbar sind.

2. Set an Vorrichtungen nach Anspruch 1, **dadurch gekennzeichnet, dass** das separate Verbindungselement (70) clipartig mit den beiden Vorrichtungen (1, 52, 53, 54, 55) verbindbar ist.

3. Set an Vorrichtungen nach einem der Ansprüche 1 oder 2, **dadurch gekennzeichnet, dass** das separate Verbindungselement (70) einen zentralen Aufnahmebereich (89) aufweist, welcher zur gemeinsamen Einfassung eines Wandungsbereichs (94) einer ersten Vorrichtung (1, 52, 53, 54, 55) und eines Wandungsbereichs (95) einer zweiten Vorrichtung (1, 52, 53, 54, 55) vorgesehen ist.

4. Set an Vorrichtungen nach einem der vorhergehenden Ansprüche, **dadurch gekennzeichnet, dass** das separate Verbindungselement (70) zwei Schenkel (84, 85) aufweist, wobei jeweils ein Schenkel (84, 85) zum Verrasten mit einer Vorrichtung (1, 52, 53, 54, 55) ausgeführt ist.

5. Set an Vorrichtungen nach einem der vorhergehenden Ansprüche, **dadurch gekennzeichnet, dass** das separate Verbindungselement (70) wenigstens einen Bereich (69) aufweist, der zum Lösen des separaten Verbindungselements (70) von den Vorrichtungen (1, 52, 53, 54, 55) mittels eines Werkzeugs betätigbar ist.

6. Set an Vorrichtungen nach einem der vorhergehenden Ansprüche, **dadurch gekennzeichnet, dass** das separate Verbindungselement (70) einen im Wesentlichen W-förmigen Querschnitt aufweist.

7. Set an Vorrichtungen nach einem der vorhergehenden Ansprüche, **dadurch gekennzeichnet, dass** die Vorrichtungen (1, 52, 53, 54, 55) eine Breite (B1, B2, B3, B4, B5) in einer Querrichtung (B) und eine Höhe (H1, H2, H3, H4, H5) in einer Hochrichtung (H) aufweisen, wobei eine erste Vorrichtung (1, 52, 53, 54, 55) eine Breite (B1), eine Höhe (H1) und eine Länge (L1) und eine zweite Vorrichtung (1, 52, 53, 54, 55) eine Breite (B2), eine Höhe (H2) und eine Länge (L2) aufweist, wobei ein Verhältnis aus der Höhe (H2) der zweiten Vorrichtung (1, 52, 53, 54, 55) zu der Höhe (H1) der ersten Vorrichtung (1, 52, 53, 54, 55) n1/x1 beträgt, wobei n1 und x1 aus der Menge der natürlichen Zahlen sind und nicht identisch sind, und/oder ein Verhältnis aus der Breite (B2) der zweiten Vorrichtung (1, 52, 53, 54, 55) zu der Breite (B1) der ersten Vorrichtung (1, 52, 53, 54, 55) n2/x2 beträgt, wobei n2 und x2 aus der Menge der natürlichen Zahlen sind und nicht identisch sind.

8. Set an Vorrichtungen nach Anspruch 7, **dadurch gekennzeichnet, dass** ein Verhältnis aus der Höhe (H2) der zweiten Vorrichtung (1, 52, 53, 54, 55) zu der Höhe (H1) der ersten Vorrichtung(1, 52, 53, 54, 55) 1/1, 1/2, 1/3, 1/4 oder 2/3 beträgt.

9. Set an Vorrichtungen nach einem der Ansprüche 7 oder 8, **dadurch gekennzeichnet, dass** ein Verhältnis aus der Breite (B2) der zweiten Vorrichtung (1, 52, 53, 54, 55) zu der Breite (B1) der ersten Vorrichtung (1, 52, 53, 54, 55) 1/1, 1/2, 1/3, 1/4 oder 2/3 beträgt.

10. Set an Vorrichtungen nach einem der Ansprüche 7 bis 9, **dadurch gekennzeichnet, dass** wenigstens eine dritte Vorrichtung (1, 52, 53, 54, 55) mit einer Länge (L3), einer Breite (B3) und einer Höhe (H3) vorgesehen ist, wobei ein Verhältnis der Höhe (H3) der dritten Vorrichtung (1, 52, 53, 54, 55) zu der Höhe (H1) der ersten Vorrichtung (1, 52, 53, 54, 55) oder zu der Höhe (H2) der zweiten Vorrichtung (1, 52, 53, 54, 55) 1/1, 1/2, 1/3, 1/4 oder 2/3 beträgt.

11. Set an Vorrichtungen nach Anspruch 10, **dadurch gekennzeichnet, dass** wenigstens eine dritte Vorrichtung (1, 52, 53, 54, 55) mit einer Länge (L3), einer Breite (B3) und einer Höhe (H3) vorgesehen ist, wobei ein Verhältnis der Breite (B3) der dritten Vorrichtung (1, 52, 53, 54, 55) zu der Breite (B1) der ersten Vorrichtung (1, 52, 53, 54, 55) oder zu der Breite (B2) der zweiten Vorrichtung (1, 52, 53, 54, 55) 1/1, 1/2, 1/3, 1/4 oder 2/3 beträgt.

12. Set an Vorrichtungen nach einem der vorhergehenden Ansprüche, **dadurch gekennzeichnet, dass** wenigstens eine Vorrichtung (1, 52, 53, 54, 55) einen quadratischen Querschnitt aufweist.

13. Set an Vorrichtungen nach einem der vorhergehenden Ansprüche, **dadurch gekennzeichnet, dass** die Längen (L1, L2, L3, L4, L5) der Vorrichtungen (1, 52, 53, 54, 55) im Wesentlichen identisch sind.

14. Set an Vorrichtungen nach einem der vorhergehenden Ansprüche, **dadurch gekennzeichnet, dass** ein Rahmen (56) vorgesehen ist, der zur Anbringung an einer Wand oder Decke vorgesehen ist und der einen zur Beladung vorgesehenen Aufnahmeraum (58) definiert, in dem wenigstens zwei Vorrichtungen (1, 52, 53, 54, 55) anordenbar sind.
